# EUROPEAN PATENT SPECIFICATION

(11) **EP 0 237 236 B1**
(45) Date of publication and mention of the grant of the patent: **05.01.1994**
(21) Application number: 87301676.0
(22) Date of filing: 25.02.1987
(51) Int. Cl.: G02B 6/10, G02B 6/42

(54) **Optical conductors**
Optische Leiter
Conducteurs optiques

(30) Priority: 12.03.1986 CA 503968; 10.11.1986 US 928754
(43) Date of publication of application: 16.09.1987
(73) Proprietor: NORTHERN TELECOM LIMITED, Montreal Quebec H3B 4N7 (CA)
(72) Inventor: Kahn, David Alexander, Nepean Ontario, K2H 3M2 (CA); Pacey, Grant Kendal, Stittsville Ontario, K0A 3G0 (CA); Hvezda, Jaroslav Marius, Nepean Ontario K2H 5M2 (CA); Dalgleish, Jack Frank, Ottawa Ontario K1Y 2H1 (CA)
(74) Representative: Laurence, Simon French

(56) References cited:
- EP-A- 26 376
- WO-A-85/03179
- US-A- 4 173 390
- US-A- 4 447 118
- IBM TECHNICAL DISCLOSURE BULLETIN, vol. 22, no. 8B, January 1980, pages 3519-3520, New York, US; L. BALLIET et al.: "Module-to-module communication via fiber-optic piping"

## Description

This invention relates to optical busbars such as are used for making connections within electronic and/or photonic equipment. Photonic equipment uses light instead of electric current, e.g. uses optical communication links.

The increasing transmission rates in present-day computer and telecommunications equipment have led to the use of optical conductors, which may have to operate at rates of 1 gigabit and more. In telecommunications equipment, they have been used to interconnect circuit cards which are mounted to extend perpendicular to a backplane. (See, for example, EP-A 0157 485 claiming the priority of U.S. patent application serial number 593,682 by A Graves, and assigned to the same assignee as this invention.) In such applications, the optical waveguide/busbar comprises an elongate moulding of optically transmissive plastics material.

It is desirable for such optical busbars to be manufactured cheaply in large quantities and readily mountable on backplanes and the like.

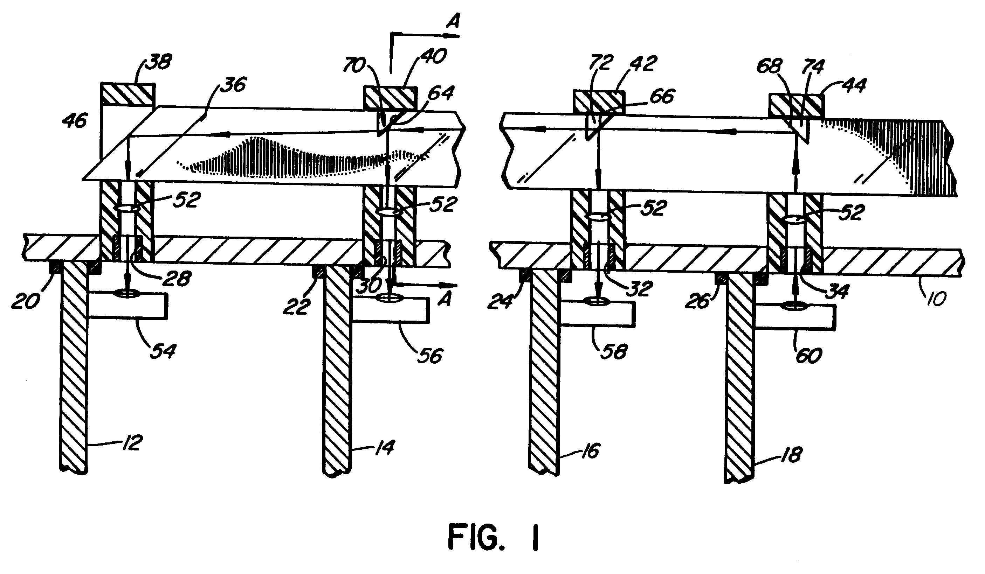

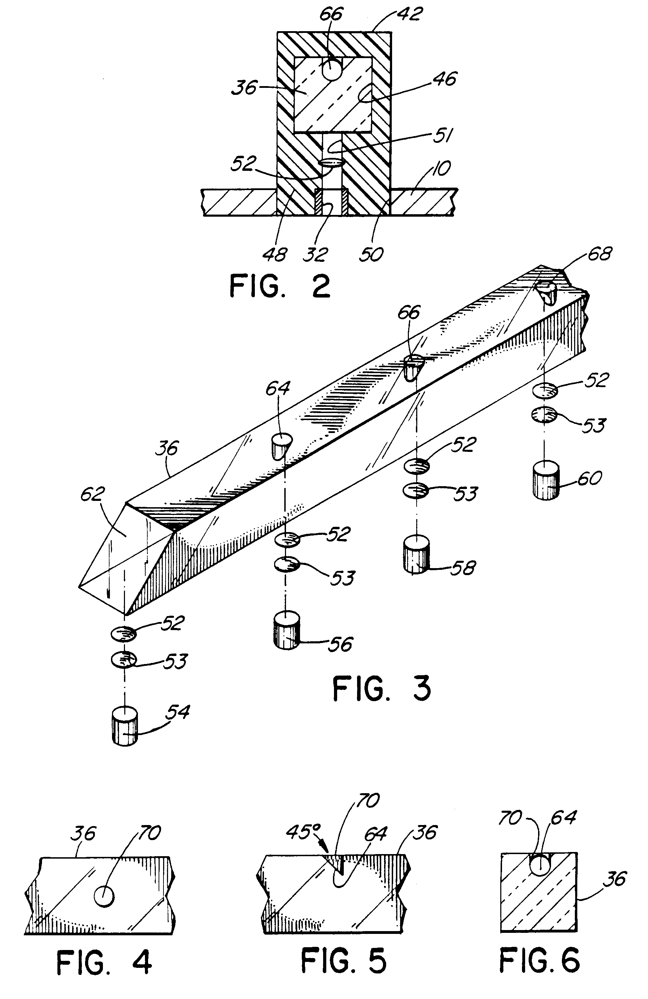

United States Patent No. 4 173 390 describes an optical T-coupler which may, for instance, be used in an optical bus, specifically in an optical network of ring form. The constructions described with specific reference to its Figures 1a, 1b and 2 employ notches or trapezoidal recesses formed in one side of a circular cross-section primary optical waveguide rod to act as a reflector for diverting, into the end of an optical branch waveguide laterally butted against the other side of the primary rod waveguide, light which was previously propagating longitudinally within the rod, and also for diverting light energy from the end of the same, or another laterally abutted branch waveguide to propagate longitudinally within the primary rod waveguide. In these constructions, with relatively small area reflectors, the or each portion of the curved surface of the primary rod, through which that rod is optically coupled with the end of the or each laterally abutted branch waveguide, is specifically stated to be utilised as a cylindrical refracting surface for effecting 'a considerable focussing of the incident light' i.e. for improving coupling efficiency. A construction employing a rectangular or square cross-section primary rod waveguide is described with particular reference to Figure 4, where of course this focussing effect would not be present, but in this instance the reflectors are not formed by the walls of the recess in the primary rod waveguide, but instead are carried by the ends of the branch waveguides, and are oriented so that the light is coupled via the same side as the recess instead of via the opposite side.

The present invention is directed to an optical busbar in which the busbar is formed by an optical waveguide rod having a side wall formed by a a planar surface extending along the length of the rod, and in which side wall reflectors are formed at spaced intervals distributed along the length of the waveguide, those reflectors being provided by the oblique truncated ends of a set of cavities formed in the opposite wall and oriented so as to couple light laterally in and out of the waveguide rod by way of its planar surface.

The lateral coupling of the light in and out of the waveguide rod through a planar surface has the particular advantage over coupling through a cylindrically curved surface in that it does not produce cylindrical lens effects which would cause the emergent beam to spread by different amounts in mutually different perpendicular planes before arriving at an associated detector, and thus being liable to contribute adversely to the collection efficiency of that detector. Additionally the arrangement in which each reflector is created in a cavity in one wall of the rod waveguide so as to divert light in and out of the opposite wall provides a particularly simple construction in which the reflector can be provided by moulding using the obliquely truncated end of a mould tool. Such moulding of the cavity may be performed at the same time as the creation of the rod waveguide itself by moulding.

According to the present invention there is provided an optical busbar which includes an elongate optical waveguide rod having a plurality of reflectors oriented to deflect light propagating in the waveguide laterally out of the waveguide, which optical busbar is characterised in that the elongate optical waveguide rod has a planar surface extending the length of one of its side walls, in that said reflectors are distributed at spaced intervals along the waveguide, aligned with each other, and each oriented to deflect a proportion of light propagating in a predetermined direction along the waveguide laterally out of the waveguide through said planar surface, and in that each member of said plurality of reflectors is provided by the oblique truncation of an associated one of a plurality of cavities formed in the wall of the waveguide opposite said planar surface side wall.

The rod may be coated with a material having a lower refractive index than that of the rod. For example, the rod may be of plastics material and the coating may be glass.

Preferably the rod has a polygonal cross-sectional shape. Such a rod is relatively easy to manufacture, especially when made of plastics material - of which polycarbonate is preferred. Polycarbonate is preferred not only because it allows easy manufacture and has a high melting point, but also because it has a relatively high refractive index, making it easier to find a coating or cladding material with a lower refractive index. Suitable coating materials include ceramics, for example silicon monoxide and silicon dioxide, and a typical thickness for the coating is about 1 micrometer. Such coating arrangements for waveguides or optical busbars are the subject of Canadian patent application serial number 522,264, which issued May 8, 1990 as Canadian Patent No. 1,268,618, in the name of W. Trumble, assigned to the same assignee as this invention. The reflectors may be metallised inclined surfaces. Typically, the inclination will be 45 degrees to the longitudinal axis of the rod.

For ease of manufacture, and mounting of the busbar upon the associated circuit board or backplane, a polygonal cross-sectional, form preferably regular, is preferred. A square cross-section is especially advantageous since, provided with suitably disposed additional inclined surfaces, it allows light beams to emerge or enter in four mutually perpendicular directions. However, other shapes could be used, for example, triangular, with the light reflectors being formed by notching one apex so as to redirect light to emerge from the opposing facet.

In preferred embodiments, the reflectors comprise reflective inclined surfaces, each formed as an oblique truncation of a cavity of elliptical, especially circular, cross-section, the elliptical axis preferably extending perpendicular to said facet. Small-diameter circular cavities can be made accurately more easily than other shapes because they can be formed during moulding by means of a mitred circular rod. Precision, small-diameter circular rods are usually available more readily than precision rods of other shapes. The last inclined reflector surface may extend completely across the end of the rod, i.e. as by mitring. The reflecting surfaces should be as close to totally reflecting as practicable. To this end, they may be coated with metal, for example, gold or aluminium.

Additional reflectors may be provided to deflect light into and out of the optical busbar through another side.

Support means for supporting the optical busbar upon a backplane or the like may comprise a seating member having a seating to cooperate with a facet or planar surface thereof, an anchorage for securing said seating member to said backplane, and lens means adjacent said seating.

An advantage of this support arrangement is that it facilitates alignment of the individual reflector means with the associated lens(es) and the associated optical element, for example a receiver/transmitter, on the circuit card which is located by the usual pins, which are at a predetermined location relative to the anchorage.

Embodiments of the invention will now be described by way of example only and with reference to the accompanying drawings in which:-
Figure 1 is a cross-sectional view of apparatus comprising a backplane and a plurality of circuit cards, the latter interconnected optically by way of an optical busbar embodying the invention;
Figure 2 is a cross-sectional fragment view on the line AA of Figure 1;
Figure 3 is a perspective schematic view of a busbar associated with a set of lenses and transmitters/receivers;
Figures 4, 5 and 6 are plan, side elevation and sectional views, respectively, of the busbar;
Figure 7 is a sectional side view of an alternative embodiment in which an additional reflector associated with the transmitter and the reflectors associated with the receivers are on opposite sides of the optical busbar; and
Figure 8 is a schematic diagram of a set of four optical busbars used to interconnect components on a backplane.

Referring to Figure 1, a backplane 10, which may be a printed circuit board or other planar member, has a plurality of circuit cards 12, 14, 16 and 18 mounted on its one face so as to extend perpendicular to the backplane 10. The circuit cards 12, 14, 16 and 18 are coupled to the backplane by electrical connectors 20, 22, 24 and 26, respectively, adjacent holes 28, 30, 32 and 34, respectively, which extend through the backplane 10. An optical busbar 36 is mounted on the opposite face of the backplane 10 by a set of seating members 38, 40, 42 and 44 spaced apart along its length, one over each of holes 28, 30, 32 and 34, respectively.

As shown also in Figure 2, each seating member 38, 40, 42 or 44 comprises a block of aluminium having a seating in the form of a square aperture 46 to receive and positively locate the optical busbar 36. The optical busbar 36 is a waveguide rod which has a polygonal, specifically square, cross-sectional shape and is a close fit in the aperture 46. The facets comprise planar surfaces, at least the lowermost one of which accurately locates the busbar 36 with its bottom facet parallel to the backplane 10. The base of each seating member 38, 40, 42 and 44 has an anchorage in the form of a set of spigots 48 (see Figure 2) which project beyond the end of the seating member to engage in corresponding holes 50 in the backplane 10. The spigot holes 50 surround the corresponding one of holes 28, 30, 32 and 34 so that each seating member is located over the corresponding one of holes 28, 30, 32 and 34.

A hole or cavity 51 extends between the square aperture 46 and the anchorage end of the seating member 42. A lens 52 is supported to extend across the hole 51 between the base of square aperture 46 and the anchorage 48. Each lens 52 is arranged with its optical axis perpendicular to the longitudinal axis of the optical busbar 36 and aligned, through the hole 28, 30, 32 or 34, with an optical element in the form of a receiver 54, 56 or 58 or an optical transmitter 60 mounted on the corresponding one of the circuit cards 12, 14, 16 and 18. The optical transmitters may be light-emitting diodes and the receivers photodiodes. Each LED or photodiode is fitted with a lens 53 corresponding to lens 52 (see Figure 3).

Alternatively, and perhaps preferably, lasers could be used. The LED, photodiode or laser, need not be located immediately adjacent the backplane but could be positioned some distance away, possibly not even on the circuit card, and connected by means of another optical waveguide such as an optical fiber, which then constitutes the transmitter or receiver.

As shown in more detail in Figures 3, 4, 5 and 6, the optical busbar 36 has a series of reflector means or taps formed by inclined planar surfaces 62, 64, 66 and 68 aligned with the lenses 52 in seating members 38, 40, 42 and 44, respectively. The inclined surfaces 62, 64 and 66 are formed as mitred ends of a series of circular cavities 70, 72 and 74, respectively (see Figure 5). The final inclined surface 62 is formed by mitring the end of the rod 36. Each cavity 70, 72 and 74 is conveniently formed during moulding of the optical waveguide 36 by means of a mould insert in the form of an obliquely truncated round rod which may readily be obtained with the required precision. The inclined reflector surfaces 62, 64, 66 and 68 may be coated with metal, for example gold or aluminium, to maximize their reflectance. The inclined surface 68 associated with the transmitter 60 is inclined oppositely to the other inclined surfaces so that light from the transmitter 60 is reflected through ninety degrees to travel along the optical waveguide 36 parallel to its longitudinal axis. At each of the 'receiver' inclined surfaces 62, 64 and 66 a portion of the light is reflected, again through ninety degrees, to pass through the associated lens 52, the backplane 10, and the receiver's lens 53, to impinge upon the receiver 54, 56 or 58. The amount of light reflected will depend upon the area of the inclined surface relative to the cross-sectional area of the rod. Typically, this will be 2-4%.

Masking or shadowing of one inclined surface by the preceding one has not been found to be a significant problem. The combination of small tap area, large inter-tap spacing, and multimode transmission serves to ensure that light by-passing one inclined reflector surface reaches the next.

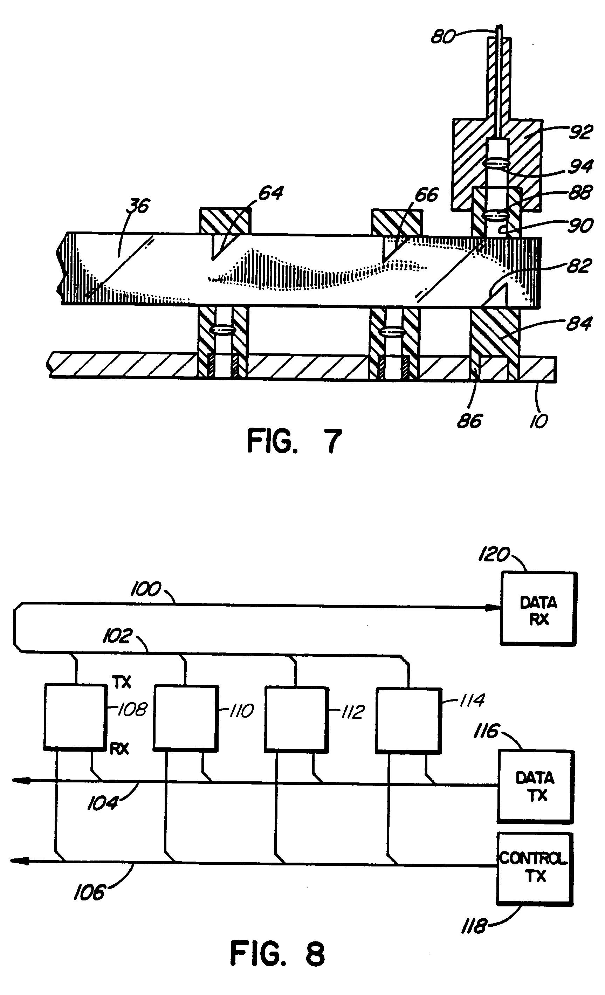

It may be convenient for the optical busbar 36 to receive a light signal from, say, an optical fiber which is behind the backplane 10. The embodiment of Figure 7 shows a convenient way of coupling such an optical fiber 80 to the optical busbar 36. The latter is similar to the optical busbar shown in Figures 3-6, in that it has a series of reflector surfaces 64, 66 etc. but differs in that the reflector surface 82 arranged to receive light from the optical fiber 80 is on the opposite side of the optical busbar 36, i.e. adjacent the backplane 10. The associated support member 84 has spigots 86 securing it to the backplane 10, and a lens 88 mounted in a hole 90 in the part of the support member 84, that is, on the side away from the backplane 10.

The optical fiber 80 is terminated in a connector 92 which houses a second lens 94. The connector 92 fits over the end of the support member 84 so that the axes of the lenses 88 and 94 are substantially aligned.

Thus, the light signal can be brought into the cabinet from the rear, i.e. behind the backplane, as is usual. It is fed into the optical busbar 36 via the connector 92, lenses 88, 94 and directed along the optical busbar 36 by the reflector surface 82. The other reflector surfaces 64, 66 etc. distribute the signal to the circuit cards as described with respect to Figure 1.

In the practical embodiment illustrated in Figure 8, four optical busbars 100, 102, 104 and 106 extend parallel to each other on a backplane-mounted support (not shown). One transmitter and two receivers are mounted on each of four circuit cards 108, 110, 112 and 114, respectively. The transmitters and receivers are connected to optical busbars 102, 104, respectively. Optical busbar 104 is shown coupled at one end (light can, of course, be launched into these optical busbars through the end) to a transmitter 116 and is coupled via its reflectors to first ones of the receiver ports of circuit cards 108, 110, 112 and 114. The other receiver ports are coupled laterally to the optical busbar 106, which is coupled at its end to a control/supervisory transmitter 118.

It is preferred for the data signals in the optical busbars 102, 104 and 106 coupled to the circuit card to travel in the same direction. This simplifies synchronization. Accordingly, optical busbar 102 is coupled by a U-bend (actually two 45 degree bends such as disclosed in Canadian patent application number 517,834, in the name of D. A. Kahn, which issued December 5, 1989 as Canadian Patent No. 1,263,549, and assigned to the same assignee as this invention), to the fourth optical conductor 100, which carries the data signals in the opposite direction to the data receiver 120.

In either the embodiment of Figure 1 or the embodiment of Figure 7, it may be preferable for the inclined surface (68 or 82) which receives light from the transmitter to be larger than usual, for example the whole of the oblique cross-sectional area of the conductor.

Various modifications of the specific embodiments are possible without departing from the scope of the invention. For example, the cross-section of the rod may be of other polygonal shapes, such as hexagonal, triangular or octagonol.

In preferred embodiments of the invention, the light source employs multimode excitation, specifically with a range of angles of internal light rays of about 10 degrees. With such multimode excitation, the spacing between aligned reflectors need not be particularly large to avoid shadowing of one reflector by the preceding reflector. In the exemplary embodiment, the spacing between the adjacent reflector was about 50 mm, giving a ratio of reflector spacing to reflector diameter of about 150:1.

It will be appreciated that although the reflector surfaces in the specific embodiment will reflect only about 2-4% of the light travelling along the busbar, if light is being transmitted into the busbar via such surfaces, they will reflect substantially all of the light. This is mainly because the lens system enables one to image the source onto the reflector so that substantially all of the light gets transmitted along the busbar. The difference is that the transmitted light is still concentrated into a few modes, whereas the light in the busbar comprises many more modes.

Moreover, although the reflector means in the specific embodiment comprise planar surfaces, other types of reflective surfaces might be employed, for example the prismatic reflector surface disclosed and claimed in Canadian application number 517, 834, or other means employing total internal reflection.

Although circular cavities are preferred for ease of mould manufacture, other shapes are comprehended by the invention; in particular, square or otherwise rectangular cross-section might be preferred because such a tap has maximum efficiency due to minimum loss of light.

It should be appreciated that the inclined surfaces may be provided in any combination of orientations to give 1:n distribution, n:1 concentration or multiplexing, or even n:m, i.e. plural transmitters to plural receivers.

## Claims

1. An optical busbar which includes an elongate optical waveguide rod (36) having a plurality of reflectors (64, 66) oriented to deflect light propagating in the waveguide laterally out of the waveguide, which optical busbar is characterised in that the elongate optical waveguide rod has a side wall formed by a planar surface extending along the length of the rod, in which side wall said reflectors are distributed at spaced intervals along the waveguide, aligned with each other, and each oriented to deflect a proportion of light propagating in a predetermined direction along the waveguide laterally out of the waveguide through said planar surface, and in that each member of said plurality of reflectors is provided by the oblique truncation of an associated one of a plurality of cavities (70, 72) formed in the wall of the waveguide opposite said planar surface side wall.

2. An optical busbar as defined in claim 1, wherein said waveguide rod (36) is a polyhedron with a polygonal cross-section and said planar surface comprises one facet of the polyhedron.

3. An optical busbar as defined in claim 1 or 2, wherein each member of said plurality of cavities (70, 72) has an elliptical or circular cross-sectional shape.

4. An optical busbar as defined in any preceding claim, wherein each reflector (64, 66) has an effective reflecting area equal to between 2% and 4% of the cross-sectional area of said waveguide rod (36).

5. An optical busbar as defined in any preceding claim, wherein said cavities (70, 72) are internally coated to provide enhanced reflectivity for their oblique truncation reflectors.

6. An optical busbar as defined in any preceding claim, wherein an additional reflector (68), provided by the oblique truncation of an additional cavity (74) formed in the wall of said waveguide rod (36) opposite said planar surface side wall, is positioned and oriented to deflect light incident upon said planar surface to propagate in said waveguide rod in said predetermined direction and towards said plurality of reflectors (64, 66).

7. An optical busbar as defined in any preceding claim, wherein said oblique truncated cavities (70, 72) are moulded cavities.

8. An optical busbar as defined in any preceding claim, wherein said waveguide rod (36) is made of plastics material.

9. Apparatus including an optical source (60), a plurality of circuit cards (12, 14, 16) each provided with an optical receiver element (54, 56, 58), an optical busbar as defined in any preceding claim and a backplane (10), wherein the circuit cards are optically coupled with the optical source by their optical receiver elements through the optical busbar which is secured relative to the cards by means of the backplane.

10. Apparatus as defined in claim 9, wherein the backplane (10) includes a plurality of lenses (52) providing optical coupling between said optical waveguide rod (36) and said optical receiver elements (54, 56, 58).

## Patentansprüche

1. Optische Sammelschiene, die einen langgestreckten Lichtwellenleiter-Stab (36) mit einer Vielzahl von Reflektoren (64, 66) einschließt, die so ausgerichtet sind, daß sie sich in dem Lichtwellenleiter ausbreitendes Licht seitlich aus dem Lichtwellenleiter heraus ablenken, wobei die optische Sammelschiene dadurch gekennzeichnet ist, daß der langgestreckte Lichtwellenleiter-Stab eine Seitenwand aufweist, die durch eine ebene Oberfläche gebildet ist, die sich entlang der Länge des Stabes erstreckt, wobei in dieser Seitenwand die Reflektoren an mit Abstand voneinander angeordneten Stellen entlang des Lichtwellenleiters verteilt, miteinander ausgerichtet und so gerichtet sind, daß ein Teil des Lichtes, das sich in einer vorgegebenen Richtung entlang des Lichtwellenleiters ausbreitet, seitlich aus dem Wellenleiter durch die ebene Oberfläche heraus abgelenkt wird, und daß jedes Element der Vielzahl vn Reflektoren durch die schräge Abstumpfung eines zugehörigen einer Vielzahl von Hohlräumen (70, 72) gebildet ist, die in der Wand des Lichtwellenleiters ausgebildet sind, die der durch die ebene Oberfläche gebildten Seitenwand gegenüberliegt.

2. Optische Sammelschiene nach Anspruch 1, bei der der Lichtwellenleiter-Stab (36) ein Polyeder mit einem vieleckigen Querschnitt ist und die ebene Oberfläche eine Fläche des Polyeders ist.

3. Optische Sammelschiene nach Anspruch 1 oder 2, bei der jedes Element der Vielzahl von Hohlräumen (70, 72) eine elliptische oder kreisförmige Querschnittsform aufweist.

4. Optische Sammelschiene nach einem der vorhergehenden Ansprüche, bei der jeder Reflektor (64, 66) eine wirksame Reflektionsfläche aufweist, die zwischen 2 Prozent und 4 Prozent der Querschnittsfläche des Lichtwellenleiter-Stabes (36) entspricht.

5. Optische Sammelschiene nach einem der vorhergehenden Ansprüche, bei der die Hohlräume (70, 72) von innen beschichtet sind, um eine vergrößerte Reflektivität für ihre schräg abgestumpften Reflektoren zu erzielen.

6. Optische Sammelschiene nach einem der vorhergehenden Ansprüche, bei der ein zusätzlicher Reflektor (68), der durch die schräg verlaufende Abstumpfung eines zusätzlichen Hohlraumes (74) gebildet ist, der in der Wand des Lichtwellenleiter-Stabes (36) gegenüberliegend zu der durch die ebene Oberfläche gebildeten Seitenwand ausgebildet ist, so angeordnet und ausgerichtet ist, daß er auf die ebene Oberfläche auftreffendes Licht so ablenkt, daß es sich in dem Lichtwellenleiter-Stab in der vorgegebenen Richtung und in Richtung auf die Vielzahl von Reflektoren (64, 66) ausbreitet.

7. Optische Sammelschiene nach einem der vorhergehenden Ansprüche, bei der die schräg abgestumpften Hohlräume (70, 72) durch Abformung hergestellte Hohlräume sind.

8. Optische Sammelschiene nach einem der vorhergehenden Ansprüche, bei der der Lichtwellenleiter-Stab (36) aus Kunststoffmaterial hergestellt ist.

9. Vorrichtung mit einer optischen Quelle (60), einer Vielzahl von Schaltungskarten (12, 14, 16), die jeweils mit einem optischen Empfängerelement (54, 56, 58) versehen sind, mit einer optischen Sammelschiene gemäß einem der vorhergehenden Ansprüche, und mit einer Rückwandplatine (10), bei der die Schaltungskarten optisch mit der optischen Quelle über ihre optischen Empfängerelemente durch die optische Sammelschiene gekoppelt sind, die bezüglich der Karten mit Hilfe der Rückwandplatine befestigt ist.

10. Vorrichtung nach Anspruch 9, bei der die Rückwandplatine (10) eine Vielzahl von Linsen (52) einschließt, die eine optische Kopplung zwischen dem Lichtwellenleiter-Stab (36) und den optischen Empfängerelementen (54, 56, 58) ergeben.

## Revendications

1. Barre omnibus optique qui comporte une tige allongée (36) de guide d'onde optique ayant plusieurs réflecteurs (64, 66) orientés afin qu'ils dévient la lumière qui se propage dans le guide d'onde latéralement à l'extérieur du guide d'onde, la barre omnibus optique étant caractérisée en ce que la tige allongée de guide d'onde optique a une paroi latérale formée par une surface plane disposée suivant la longueur de la tige, et les réflecteurs sont répartis dans la paroi latérale à certains intervalles le long du guide d'onde et sont alignés les uns sur les autres et orientés chacun afin qu'il dévie une proportion de la lumière qui se propage dans un sens prédéterminé le long du guide d'onde en direction latérale vers l'extérieur du guide d'onde à travers la surface plane, et en ce que chaque réflecteur parmi les réflecteurs est formé par troncature oblique d'une cavité associée parmi plusieurs cavités (70, 72) formées dans la paroi du guide d'onde opposée à la paroi latérale ayant la surface plane.

2. Barre omnibus optique selon la revendication 1, dans laquelle la tige (36) de guide d'onde est un polyèdre ayant une section polygonale et la surface plane est une face du polyèdre.

3. Barre omnibus optique selon la revendication 1 ou 2, dans laquelle chaque cavité parmi les cavités (70, 72) a une configuration elliptique ou circulaire en coupe.

4. Barre omnibus optique selon l'une quelconque des revendications précédentes, dans laquelle chaque réflecteur (64, 66) a une surface réfléchissante efficace comprise entre 2 et 4 % de la section de la tige de guide d'onde (36).

5. Barre omnibus optique selon l'une quelconque des revendications précédentes, dans laquelle les cavités (70, 72) sont revêtues intérieurement afin que le pouvoir réflecteur des réflecteurs à troncature oblique soit accru.

6. Barre omnibus optique selon l'une quelconque des revendications précédentes, dans laquelle un réflecteur supplémentaire (68), formé par troncature oblique d'une cavité supplémentaire (74) formée dans la paroi de la tige (36) de guide d'onde opposée à la paroi latérale ayant la surface plane, est disposé et orienté afin qu'il dévie la lumière parvenant sur la surface plane et que la lumière se propage dans la tige de guide d'onde dans le sens prédéterminé et vers les réflecteurs (64, 66).

7. Barre omnibus optique selon l'une quelconque des revendications précédentes, dans laquelle les cavités (70, 72) à troncature oblique sont des cavités moulées.

8. Barre omnibus optique selon l'une quelconque des revendications précédentes, dans laquelle la tige de guide d'onde (36) est formée de matière plastique.

9. Appareil comprenant une source optique (60), plusieurs cartes (12, 14, 16) de circuit ayant chacune un élément récepteur optique (54, 56, 58), une barre omnibus optique selon l'une quelconque des revendications précédentes, et un fond de panier (10), dans lequel les cartes de circuit sont couplées optiquement à la source optique par leurs éléments récepteurs optiques par l'intermédiaire de la barre omnibus optique qui est fixée par rapport aux cartes par le fond de panier.

10. Appareil selon la revendication 9, dans lequel le fond de panier (10) comporte plusieurs lentilles (52) assurant le couplage optique entre la tige de guide d'onde optique (36) et les éléments récepteurs optiques (54, 56, 58).
